# EUROPÄISCHE PATENTANMELDUNG

(11) **EP 4 807 477 A1**
(43) Veröffentlichungstag der Anmeldung: **16.09.2026**
(21) Anmeldenummer: 26163213.7
(22) Anmeldetag: 09.03.2026
(51) Int. Cl.: G05B 23/02, G05B 19/409

(54) **VERFAHREN ZUR DYNAMISCHEN ANPASSUNG EINER BENUTZERSCHNITTSTELLE FÜR EINE TEXTILMASCHINE**

(30) Priorität: 13.03.2025 LU 509904
(71) Anmelder: Saurer Spinning Solutions GmbH & Co. KG, 52531 Übach-Palenberg (DE)
(72) Erfinder: Peter, Michael, 52076 Aachen (DE)
(74) Vertreter: Morgenthum-Neurode, Mirko

(57) **Zusammenfassung**

Die Erfindung betrifft ein Verfahren zur dynamischen Anpassung einer Benutzerschnittstelle für eine Textilmaschine, insbesondere zur Überwachung und/oder Steuerung eines Betriebs der Textilmaschine auf Basis von Benutzereingaben über die Benutzerschnittstelle, umfassend:
- Bereitstellen zumindest eines Nutzungsprofils für zumindest einen Benutzer der Textilmaschine,
- Generieren einer Anpassungsspezifikation für die Benutzerschnittstelle auf Basis des bereitgestellten zumindest einen Nutzungsprofils, um darüber zumindest eine Anpassung der Benutzerschnittstelle an den Benutzer zu spezifizieren,
- Bereitstellen der generierten Anpassungsspezifikation.

Um die Effizienz der Überwachung und/oder Steuerung eines Betriebs der Textilmaschine zu verbessern, ist vorgesehen, dass die Anpassungsspezifikation automatisiert anhand des bereitgestellten zumindest einen Nutzungsprofils generiert wird, wobei hierzu automatisiert zumindest eine individuelle Anforderung des Benutzers ermittelt und die zumindest eine Anpassung der Benutzerschnittstelle als zumindest eine dafür geeignete Anpassung der Benutzerschnittstelle ausgewählt wird.

## Beschreibung

Die vorliegende Erfindung betrifft ein Verfahren zur dynamischen Anpassung einer Benutzerschnittstelle für eine Textilmaschine. Ferner betrifft die Erfindung ein System, ein Computerprogramm und eine Vorrichtung für diesen Zweck.

### Stand der Technik

Die Bedienung komplexer Textilmaschinen erfordert häufig detaillierte Kenntnisse und umfangreiche Einstellungen, die für verschiedene Benutzer unterschiedlich sein können. Die im Stand der Technik üblichen statischen Benutzeroberflächen können dabei zu ineffizient sein und zu Bedienungsfehlern führen.

### Offenbarung der Erfindung

Es ist eine Aufgabe der vorliegenden Erfindung, die Nachteile des Standes der Technik zumindest teilweise zu beheben oder zumindest eine Alternative zu herkömmlichen Lösungen bereitzustellen. Insbesondere ist es eine Aufgabe, die Effizienz der Überwachung und/oder Steuerung eines Betriebs von Textilmaschinen über eine Benutzerschnittstelle zu verbessern.

Gegenstand der Erfindung ist ein Verfahren mit den Merkmalen des Anspruchs 1, ein System mit den Merkmalen des Anspruchs 12, ein Computerprogramm mit den Merkmalen des Anspruchs 14 sowie eine Vorrichtung mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System, dem erfindungsgemäßen Computerprogramm sowie der erfindungsgemäßen Vorrichtung, und jeweils umgekehrt, so dass bezüglich der Offenbarung der Erfindung stets auch eine wechselseitige Bezugnahme möglich ist.

Gegenstand der Erfindung ist insbesondere ein Verfahren zur dynamischen Anpassung einer Benutzerschnittstelle, vorzugsweise Benutzeroberfläche, für eine, insbesondere industrielle, Textilmaschine, insbesondere zur Überwachung und/oder Steuerung eines Betriebs der Textilmaschine auf Basis von Benutzereingaben über die Benutzerschnittstelle.

Das Verfahren kann ein Bereitstellen zumindest eines Nutzungsprofils für zumindest einen Benutzer der Textilmaschine umfassen. Die Bereitstellung des zumindest einen Nutzungsprofils kann z. B. in digitaler Form erfolgen, bspw. durch ein Empfangen oder Auslesen des zumindest einen digitalen Nutzungsprofils aus einem Datenspeicher, aus einer Datenbank oder über ein Datennetzwerk.

Weiter kann das Verfahren ein Generieren einer Anpassungsspezifikation für die Benutzerschnittstelle auf Basis des bereitgestellten zumindest einen Nutzungsprofils umfassen, um darüber zumindest eine Anpassung der Benutzerschnittstelle an den Benutzer zu spezifizieren. Dies ist z. B. durch eine Datenverarbeitung des zumindest einen Nutzungsprofils möglich.

Weiter kann das Verfahren ein Bereitstellen der generierten Anpassungsspezifikation umfassen, bspw. in digitaler Form, bevorzugt durch ein Aussenden der Anpassungsspezifikation. Zusätzlich kann ggf. auch bereits eine automatisierte Anpassung der Benutzerschnittstelle und/oder eine Ansteuerung der Textilmaschine entsprechend der generierten Anpassungsspezifikation vorgesehen sein.

Weiter kann erfindungsgemäß die Anpassungsspezifikation auch automatisiert anhand des bereitgestellten zumindest einen Nutzungsprofils generiert werden. Hierzu kann ggf. automatisiert zumindest eine individuelle Anforderung des Benutzers ermittelt und die zumindest eine Anpassung der Benutzerschnittstelle als zumindest eine dafür geeignete Anpassung der Benutzerschnittstelle ausgewählt werden.

Mit anderen Worten kann die Benutzerschnittstelle, vorzugsweise Benutzeroberfläche der Textilmaschine, dynamisch an den individuellen Benutzer angepasst werden, indem zumindest ein Nutzungsprofil ausgewertet und anhand dieses Nutzungsprofils eine Anpassungsspezifikation mit Anpassungsanweisungen für die Benutzerschnittstelle generiert wird. Dies hat die Wirkung, dass die Benutzerschnittstelle an den Benutzer individuell und insbesondere kontinuierlich angepasst wird. Dies ermöglicht eine personalisierte und effiziente Bedienung der Textilmaschine durch automatisierte Anpassungen, die auf den Bedürfnissen des Benutzers basieren. Die kontinuierliche Optimierung der Benutzerschnittstelle erfolgt vorzugsweise durch das erfindungsgemäße Verfahren bzw. System selbst, da es automatisch individuelle Anforderungen ermittelt und geeignete Anpassungen vornimmt.

Es ist möglich, dass mehrere Benutzer für die Bedienung der Textilmaschine über die Benutzerschnittstelle vorgesehen sind. Entsprechend können auch mehrere Nutzungsprofile bereitgestellt und insbesondere für die unterschiedlichen Benutzer ermittelt werden, um jeweils individuelle Anpassungen der Benutzerschnittstelle vorzunehmen.

Es ist entsprechend ein Vorteil der Erfindung, dass die Benutzerschnittstelle nicht oder nicht nur als eine statische, sondern als eine adaptive Benutzeroberfläche bereitgestellt werden kann. Eine adaptive Benutzeroberfläche, die sich an den jeweiligen Benutzer anpasst, kann die Benutzerfreundlichkeit verbessern und die Produktivität erhöhen. Die Benutzerschnittstelle kann entsprechend im Rahmen der Erfindung auch als eine adaptive Benutzerschnittstelle bezeichnet werden und ggf. dadurch gekennzeichnet sein, dass sie sich im laufenden Betrieb der Textilmaschine automatisiert anhand der generierten Anpassungsspezifikation an den jeweiligen aktuellen Benutzer der Benutzerschnittstelle anpasst. Mit anderen Worten kann in Abhängigkeit vom Nutzungsprofil des aktuellen Benutzers die Benutzerschnittstelle eingestellt und/oder ggf. auch bereits eine Einstellung für die Textilmaschine vorgeschlagen werden.

Das erfindungsgemäße Verfahren kann auch als ein Verfahren zur dynamischen Anpassung nicht nur einer Benutzerschnittstelle für eine Textilmaschine, sondern auch eines Betriebs der Textilmaschine anhand der generierten Anpassungsspezifikation ausgeführt sein.

Konkret kann mit der dynamischen Anpassung auch die Anpassung der Benutzerschnittelle zur Bedienung der Textilmaschine, also z. B. zur Eingabe von Maschinenbefehlen und/oder Maschinenparametern für die Textilmaschine und/oder zur Steuerung der Textilmaschine, gemeint sein. Mit anderen Worten kann die Art und/oder Funktion und/oder Darstellung der Benutzerschnittelle derart angepasst werden, dass die vorgenannte Bedienung (z. B. Eingabe und/oder Steuerung) optimiert und/oder verbessert wird. Somit kann das Verfahren dazu ausgeführt sein, einen direkten Einfluss auf die Bedienung und insbesondere Parametrisierung und/oder Steuerung der Textilmaschine zu nehmen.

Eine Textilmaschine, kurz als Maschine bezeichnet, kann vorzugsweise zur Verarbeitung von Garnen und/oder Fasern und/oder zur Herstellung von Textilien und/oder zur Veredelung von Geweben und/oder zur Verarbeitung von Fasern in Garnen vorgesehen sein. Insbesondere kann die Maschine für einen automatisierten Betrieb konfiguriert sein, wodurch die Effizienz und Präzision in der Textilproduktion verbessert werden kann.

Die Textilmaschine ist insbesondere als eine industrielle Textilmaschine ausgebildet, vorzugsweise mit einer Vielzahl von Spinnstellen, bevorzugt mit mindestens 10 oder mindestens 100 oder mindestens 1000 Spinnstellen.

Beispiele für Textilmaschinen im Rahmen der Erfindung umfassen: Spinnmaschinen, Maschinen für das Ringspinnen, Kompaktspinnen, Rotorspinnen, Luftspinnen sowie Sondermaschinen wie Friktionsspinnen oder Elektroschmelzspinnen. Weitere Maschinen umfassen insbesondere Webmaschinen, Stickmaschinen, Strickmaschinen, Färbemaschinen und Beschichtungsmaschinen. Jede dieser Maschinenarten kann mit spezifischen Funktionseinheiten ausgestattet sein, die auf die jeweiligen Produktionsprozesse abgestimmt sind und über die Benutzerschnittstelle eingestellt werden.

Die Textilmaschine umfasst bevorzugt eine Steuerungseinheit, die dafür ausgebildet ist, verschiedene Produktionsparameter wie Drehgeschwindigkeit, Fadenspannung, Temperatur und/oder Materialvorschub einzustellen. Zur Eingabe und/oder Einstellung der Produktionsparameter durch einen Benutzer kann die Benutzerschnittstelle (HMI) vorgesehen sein. Die Eingabe und/oder Einstellung der Produktionsparameter kann somit als Bedienung der Maschine verstanden werden, welche durch die HMI bereitgestellt wird.

Die Steuerungseinheit umfasst vorzugsweise mindestens eine Eingabeeinheit und/oder mindestens eine Verarbeitungseinheit und/oder mindestens eine Anzeigeeinheit, die jeweils miteinander kommunizieren können. In einer bevorzugten Ausführungsform kann die Steuerungseinheit mit der HMI ausgestattet sein, die z. B. verschiedene Betriebsmodi und/oder Steuerungsmöglichkeiten und/oder Eingabefelder für die Produktionsparameter und/oder Echtzeitdiagnosen bereitstellt, um die Textilmaschine über die HMI zu bedienen. Die Steuerungseinheit kann ferner als die erfindungsgemäße Vorrichtung ausgebildet sein und/oder diese aufweisen.

Die Benutzerschnittstelle (HMI) kann implementiert sein als eine grafische Benutzeroberfläche, die bspw. auf einem Touchscreen-Display betrieben wird. Alternativ oder zusätzlich kann sie physische Bedienelemente, wie Schalter oder Drehregler, umfassen, die speziell für robuste Produktionsumgebungen ausgelegt sind. Die HMI kann ferner Kommunikationsschnittstellen wie Ethernet, WLAN und/oder serielle Anschlüsse umfassen, um eine Integration in übergeordnete Produktionssysteme zu ermöglichen. Es ist möglich, dass auch die Einstellung und/oder Aktivierung und/oder Auswertung der Bedienelemente als Bedienung der Maschine verstanden wird, für welche die HMI vorgesehen ist.

Ein weiteres Merkmal der Textilmaschine kann eine Überwachungseinheit umfassen, die mit Sensoren ausgestattet ist. Diese Sensoren können vorzugsweise Parameter wie Materialspannung, Garnstärke, Maschinendrehzahl oder Vibration überwachen. In einer bevorzugten Ausgestaltung umfasst die Überwachungseinheit mindestens eine optische Kamera, einen Drucksensor und/oder einen Temperatursensor. Diese Sensoren können mit der Steuerungseinheit gekoppelt sein, um eine automatische Anpassung der Produktionsparameter zu ermöglichen, wodurch die Produktqualität verbessert werden kann. Es ist möglich, dass auch die Einstellung und/oder Durchführung der Überwachung mittels der Überwachungseinheit als Bedienung der Maschine verstanden wird, für welche die HMI vorgesehen ist.

Die Textilmaschine kann ferner einen Mechanismus zur automatischen Reinigung und/oder Wartung umfassen. Dieser Mechanismus kann beispielsweise eine Reinigungsdüse für Faserrückstände, ein Schmierungssystem für bewegliche Teile und/oder ein System zur Überprüfung des Verschleißes umfassen. Durch diese Maßnahmen wird die Standzeit der Maschine erhöht und der Wartungsaufwand reduziert. Die HMI kann ebenfalls zur Ansteuerung dieser Funktionen vorgesehen sein und entsprechende Steuerungselemente dafür aufweisen.

Jede der vorgenannten Funktionen wie die Reinigung, Wartung, Überwachung, und/oder Einstellungen durch die Steuerungseinheit können ggf. jeweils durch die Benutzerschnittstelle eingestellt und/oder angesteuert werden. Diese Einstellung und/oder Ansteuerung kann vorzugsweise durch die generierte Anpassungsspezifikation automatisch an einen Benutzer individuell und gezielt angepasst werden. Dies kann den Effekt haben, dass die Einstellung und/oder Ansteuerung über die Benutzerschnittstelle für jeden Benutzer der Textilmaschine - zumindest nach einer ersten "Eingewöhnungszeit", bei der das Nutzungsprofil individualisiert wird, unterschiedlich ist. Dies ermöglicht eine Anpassung der Benutzerschnittstelle an die individuellen Anforderungen der Benutzer.

Auch ist es optional denkbar, dass die zumindest eine individuelle Anforderung des (jeweiligen) Benutzers dadurch automatisiert ermittelt wird, dass zumindest eine historische Benutzeraktivität, vorzugsweise Benutzereingaben, die bevorzugt über die Benutzerschnittstelle stattgefunden haben, und/oder eine Benutzerinformation, vorzugsweise umfassend eine Tätigkeitbeschreibung und/oder Persönlichkeitseigenschaften und/oder eine Erfahrungsspezifikation und/oder einen Kenntnisstand des Benutzers, ausgewertet wird. Damit kann die Eingewöhnungszeit effizient und mit hohem Automatisierungsgrad umgesetzt werden. Auf diese Weise kann ferner das Verfahren bzw. System anhand historischer Nutzungsdaten und Informationen über den Benutzer die individuellen Bedürfnisse und Präferenzen erkennen. Durch die Analyse der Benutzereingaben, Tätigkeitbeschreibungen, Persönlichkeitseigenschaften, Erfahrungen und/oder des Wissensstandes des Nutzers kann das System die geeignetste Anpassung der Benutzerschnittstelle auswählen.

Weiter ist es bei dem erfindungsgemäßen Verfahren und System denkbar, dass die zumindest eine für die individuelle Anforderung des (jeweiligen) Benutzers (Benutzeranforderung) geeignete Anpassung dadurch automatisiert ausgewählt wird, dass ein regelbasiertes und/oder wahrscheinlichkeitsbasiertes Auswahlverfahren durchgeführt wird, bei welchem aus mehreren Anpassungsoptionen eine ausgewählt wird, die die höchste Eignung für die Benutzeranforderung aufweist, vorzugsweise hinsichtlich einer Anordnung und/oder Visualisierungsparametern von Schnittstellenelementen der Benutzerschnittstelle und/oder einer Auswahl von Parametern der Textilmaschine, die über die Benutzerschnittstelle einstellbar sind und den Betrieb der Textilmaschine beeinflussen, und/oder eines Detailgrads und/oder eines Assistenzniveaus für diese Einstellungen. Ein regelbasiertes oder wahrscheinlichkeitsbasiertes Auswahlverfahren kann dabei sicherstellen, dass die am besten geeignete Anpassung gewählt wird.

Vorteilhafterweise kann bei der Erfindung vorgesehen sein, dass für die Auswahl der zumindest einen geeigneten Anpassung wenigstens ein wahrscheinlichkeitsbasiertes Auswahlverfahren ausgeführt wird, welches zumindest eines der folgenden Auswahlmethoden umfasst:
- eine schrittweise Annäherung an die geeignete Anpassung, vorzugsweise gemäß einem vordefinierten Optimierungskriterium für die Eignung,
- eine Anwendung eines auf Maschinellen Lernen basierten Modells, welches eine Eingabe auf Basis des zumindest einen Nutzungsprofils erhält und dessen Ausgabe für die Definition der Anpassung verwendet wird,
- eine Anwendung eines auf Maschinellen Lernen basierten Vorhersagemodells, welches eine Eingabe auf Basis des zumindest einen Nutzungsprofils erhält und welches eine Aktivität des Benutzers vorhersagt, wobei auf der Basis einer Ausgabe des Vorhersagemodells für die vorhergesagte Aktivität relevante Anpassungen ausgewählt werden, um die zumindest eine geeignete Anpassung zu erhalten.

Dadurch wird erreicht, dass die Auswahl der Anpassung der Benutzerschnittstelle präzise und effizient erfolgt. Die Verwendung von probabilistischen Methoden ermöglicht es, verschiedene Ansätze zu kombinieren, um eine optimale Anpassung für den jeweiligen Benutzer zu finden. Eine schrittweise Annäherung anhand eines Optimierungskriteriums erlaubt eine kontrollierte Verbesserung der Anpassung, während maschinelle Lernmodelle die Komplexität des Systems nutzen können, um individualisierte Anpassungen auf Basis von Nutzerverhalten vorzunehmen. Vorhersagemodelle bieten zusätzlich die Möglichkeit, zukünftiges Verhalten zu antizipieren und somit proaktiv Anpassungen vorzunehmen, die den Benutzerbedarf noch besser erfüllen.

Außerdem kann es im Rahmen der Erfindung von Vorteil sein, dass die Generierung der Anpassungsspezifikation die folgenden Schritte umfasst, welche während der Benutzung der Textilmaschine und/oder während der Interaktion mit der Benutzerschnittstelle durch den Benutzer wiederholt durchgeführt werden:
- Ermitteln eines aktuellen Kontextes der Benutzung der Benutzerschnittstelle und/oder der Textilmaschine, wie bspw. aktuelle Aufgaben und/oder Produktionsparameter und/oder Tageszeit,
- Priorisieren von relevanten Informationen und/oder Steuerungsoptionen, welche durch die Benutzerschnittstelle bereitgestellt werden, in Abhängigkeit von dem ermittelten Kontext.

Daher kann eine dynamische Anpassung der Benutzerschnittstelle erreicht werden, die den aktuellen Kontext und die Bedürfnisse des Nutzers berücksichtigt. Dies führt zu einer effizienteren Nutzung der Maschine und einem verbesserten Bedienkomfort durch relevante Informationen und Steuerungsoptionen. Die Personalisierung erhöht die Effizienz und reduziert Fehler durch angepasste Funktionen.

Vorteilhaft ist es darüber hinaus, wenn im Rahmen der Erfindung die Bereitstellung der Anpassungsspezifikation eine automatisierte Anpassung der Benutzerschnittstelle entsprechend der Anpassungsspezifikation umfasst.

Weiter ist es denkbar, dass die Bereitstellung der Anpassungsspezifikation umfasst:
- Initiieren einer Ausgabe eines Vorschlags für die Anpassung der Benutzerschnittstelle entsprechend der Anpassungsspezifikation,
- Erfassen einer Bestätigungseingabe des Benutzers mit einer Bestätigung des Vorschlags für die Anpassung,
- Durchführen der Anpassung der Benutzerschnittstelle entsprechend der Anpassungsspezifikation, ausgelöst durch die erfasste Bestätigungseingabe.

Dadurch wird erreicht, dass die Anpassungen an der Benutzerschnittstelle in einem interaktiven Prozess erfolgen und dem Benutzer ermöglicht wird, die Vorschläge zu prüfen und zu bestätigen, was die Nutzerfreundlichkeit erhöht und die Akzeptanz des Systems verbessert. Diese Vorgehensweise ermöglicht eine bessere Abstimmung auf die Bedürfnisse des Nutzers und minimiert Fehlanpassungen.

Beispielsweise kann es vorgesehen sein, dass die Bereitstellung des zumindest einen Nutzungsprofils zumindest eine der folgenden Schritte umfasst:
- Identifizieren der individuellen Benutzeranforderungen, insbesondere umfassend Bedürfnissen und/oder Präferenzen des Benutzers,
- Erfassung und Auswerten von Interaktionen des Benutzers.

Auf diese Weise ist es möglich, dass das System eine detaillierte Darstellung der individuellen Bedürfnisse und Präferenzen jedes Nutzers erstellt. Durch die Analyse der Benutzerinteraktionen kann das Verfahren bzw. System bspw. erkennen, welche Funktionen am häufigsten verwendet werden, welche Bedienvorgänge bevorzugt werden und wo Verbesserungspotential besteht. Dieses Wissen bildet die Grundlage für die dynamische Anpassung der Benutzerschnittstelle an den jeweiligen Benutzer, was zu einer gesteigerten Effizienz und Benutzerfreundlichkeit führt.

Ein weiterer Vorteil im Rahmen der Erfindung ist erzielbar, wenn das Nutzerprofil regelmäßig und automatisch auf Basis einer Auswertung der Benutzung der Benutzerschnittstelle aktualisiert wird, so dass die Anpassung nicht nur automatisiert, sondern auch lernfähig durchgeführt wird. Auf diese Weise kann das System die Benutzerbedürfnisse über die Zeit hinweg immer besser verstehen und die Anpassungen der Benutzerschnittstelle entsprechend anpassen. Dies führt zu einer kontinuierlichen Verbesserung der Benutzerfreundlichkeit und Effizienz.

Weiter ist im Rahmen der Erfindung denkbar, dass die automatisierte Generierung der Anpassungsspezifikation wiederholt und/oder regelmäßig und/oder kontinuierlich während der Benutzung der Benutzerschnittstelle durch den Benutzer stattfindet, vorzugsweise zeitgesteuert als Hintergrundprozess. Somit kann die Benutzeroberfläche sich dynamisch an den Nutzer anpassen, indem Anpassungsspezifikationen automatisch und regelmäßig während der Nutzung generiert werden. Dies ermöglicht eine kontinuierliche Optimierung der Benutzeroberfläche basierend auf dem Nutzungsverhalten und gewährleistet ein hochspezifisches Benutzererlebnis.

Auch ist es optional denkbar, dass die folgenden Schritte vorgesehen sind:
- Initiieren einer Authentifizierung des Benutzers, vorzugsweise mittels RFID und/oder biometrischen Daten und/oder einer passwortbasierten Anmeldung,
- Bestimmen einer ersten Angabe zum Nutzungsprofil auf Basis der Authentifizierung,
- Erfassen von Nutzungsdaten während der Benutzung der Benutzerschnittstelle, welche eine Interaktion des Benutzers mit der Benutzerschnittstelle und/oder Benutzerpräferenzen spezifizieren,
- Bestimmen einer zweiten Angabe zum Nutzungsprofil auf Basis der erfassten Nutzungsdaten,
- Erfassen eines Kontextes, in welchem die Benutzung an der Textilmaschine stattfindet, vorzugsweise in Abhängigkeit von zumindest einem Betriebsparameter der Textilmaschine wie einer Produktionseinstellung und/oder Geräteeinstellung und/oder Materialeinstellung bei der Textilmaschine,
- Durchführen der automatisierten Generierung der Anpassungsspezifikation anhand der Angaben zum Nutzungsprofil und des Kontextes, um die Benutzerschnittstelle dynamisch während der Benutzung anzupassen, wobei vorzugsweise für den Kontext relevante Informationen und/oder Steuerungsmöglichkeiten für die Textilmaschine bei der Benutzerschnittstelle hervorgehoben werden.

Dabei kann vorzugsweise eine Feedbackeingabe des Benutzers erfasst werden, um - vorzugsweise in Echtzeit - die Generierung der Anpassungsspezifikation zu beeinflussen. Damit wird der Vorteil erzielt, dass die Benutzerfreundlichkeit und Effizienz durch eine dynamische Anpassung der Benutzerschnittstelle an die individuellen Bedürfnisse und den aktuellen Kontext des Nutzers gesteigert werden kann. Die Personalisierung der Benutzerschnittstelle führt zu einer Minimierung von Bedienungsfehlern und ermöglicht eine schnellere Gewöhnung an das System, was besonders bei komplexen Maschinen relevant ist

Vorzugsweise kann vorgesehen sein, dass die Benutzerschnittstelle eine graphische Benutzeroberfläche mit mehreren Schnittstellenelementen umfasst, wobei eine Auswahl und/oder Anordnung und/oder Beschriftung und/oder Funktion und/oder Darstellung und/oder Größe der Schnittstellenelemente in Abhängigkeit von der Anpassungsspezifikation variiert wird. Somit kann die Benutzeroberfläche flexibel an unterschiedliche Bedürfnisse angepasst werden, indem Schnittstellenelemente wie Schaltflächen, Menüs und Diagramme individuell konfiguriert werden können. Dies ermöglicht eine intuitive und effiziente Bedienung der Textilmaschine, da relevante Funktionen schnell und einfach zugänglich sind. Die Anpassung der Schnittstelle basierend auf den Präferenzen des Benutzers trägt ferner ggf. zur Verbesserung der Benutzerfreundlichkeit und Reduzierung von Bedienungsfehlern bei.

In einer weiteren Möglichkeit kann vorgesehen sein, dass auf Basis einer Benutzerinteraktion mit der angepassten Benutzerschnittstelle eine Steuerung des Betriebs der Textilmaschine durchgeführt wird, wobei in Abhängigkeit von der zumindest einen ausgewählten und/oder durchgeführten geeigneten Anpassung zumindest ein Steuerungsparameter der Steuerung automatisch angepasst wird, und/oder ein Steuerungselement der Benutzerschnittstelle angeordnet wird, und/oder ein Steuerungselement der Benutzerschnittstelle ein- oder ausgeblendet wird, und/oder wenigstens ein Eingabeelement der Benutzerschnittstelle ausgefüllt wird, und/oder wenigstens ein Steuerungsparameter für den Benutzer vorgeschlagen wird und/oder wenigstens eine über die Benutzerschnittstelle angezeigte Information hervorgehoben oder ergänzt wird. Dadurch wird erreicht, dass die Benutzerschnittstelle der Textilmaschine auf Nutzerinteraktionen reagiert und den Betrieb dynamisch anpasst. Die Steuerungsparameter können automatisch angepasst werden, je nach ausgewählten Anpassungen der Benutzerschnittstelle. Die Anzeige von Steuerungselementen kann bspw. ein- oder ausgeblendet und Eingabefelder können ausgefüllt werden. Des Weiteren können dem Benutzer Steuerungsparameter vorgeschlagen und Informationen hervorgehoben oder ergänzt werden. Dies führt zu einer erhöhten Effizienz, da die Maschine direkt auf die Bedürfnisse des Nutzers reagiert, und zu einer verbesserten Benutzerfreundlichkeit, da die Benutzerschnittstelle intuitiv und an den Nutzer angepasst ist.

Ebenfalls Gegenstand der Erfindung ist ein System, vorzugsweise in der Form einer Textilmaschine, aufweisend eine Vorrichtung zur dynamischen Anpassung einer Benutzerschnittstelle für die Textilmaschine, insbesondere zur Überwachung und/oder Steuerung eines Betriebs der Textilmaschine auf Basis von Benutzereingaben über die Benutzerschnittstelle.

Die Vorrichtung kann umfassen:
- Mittel zur Bereitstellung zumindest eines Nutzungsprofils für zumindest einen oder mehrere Benutzer der Textilmaschine,
- Mittel zur Generierung einer Anpassungsspezifikation für die Benutzerschnittstelle auf Basis des bereitgestellten zumindest einen Nutzungsprofils, um darüber zumindest eine Anpassung der Benutzerschnittstelle an den (jeweiligen) Benutzer zu spezifizieren,
- Mittel zur Bereitstellung der generierten Anpassungsspezifikation.

Dabei kann die Vorrichtung dazu ausgeführt sein, die Anpassungsspezifikation automatisiert anhand des bereitgestellten zumindest einen Nutzungsprofils zu generieren und hierzu vorzugsweise automatisiert zumindest eine individuelle Anforderung des Benutzers zu ermitteln und die zumindest eine Anpassung der Benutzerschnittstelle als zumindest eine dafür geeignete Anpassung der Benutzerschnittstelle auszuwählen. Damit bringt das erfindungsgemäße System die gleichen Vorteile mit sich, wie sie ausführlich mit Bezug auf ein erfindungsgemäßes Verfahren beschrieben worden sind. Zudem kann das erfindungsgemäße System geeignet sein, ein erfindungsgemäßes Verfahren auszuführen. Die beschriebenen Mittel können z. B. als Softwarekomponenten und/oder Elektronikkomponenten ausgebildet sein.

Des Weiteren ist es denkbar, dass eine Schnittstellenvorrichtung vorgesehen ist, welche die Benutzerschnittstelle für den Benutzer bereitstellt, wobei die Schnittstellenvorrichtung die Vorrichtung aufweist und/oder mit der Textilmaschine fest verbunden ist. Dadurch wird erreicht, dass die Schnittstelle zwischen dem Benutzer und der Maschine nahtlos integriert und für den Benutzer intuitiv bedienbar ist. Die direkte Verbindung ermöglicht eine schnelle Datenübertragung und eine Echtzeit-Reaktion auf Benutzereingaben. Eine fest integrierte Schnittstellenvorrichtung kann auch die Stabilität des Systems erhöhen und die Sicherheit durch einen direkten Datenaustausch gewährleisten.

Ebenfalls Gegenstand der Erfindung ist eine Vorrichtung zur Datenverarbeitung, umfassend Mittel zur Ausführung der Schritte des erfindungsgemäßen Verfahrens. Damit bringt die erfindungsgemäße Vorrichtung die gleichen Vorteile mit sich, wie sie ausführlich mit Bezug auf ein erfindungsgemäßes Verfahren beschrieben worden sind.

Ebenfalls Gegenstand der Erfindung ist ein Computerprogramm, insbesondere Computerprogrammprodukt, umfassend Befehle, die bei der Ausführung des Computerprogrammes durch mindestens einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Als der Computer kann eine Datenverarbeitungsvorrichtung, bspw. die erfindungsgemäße Vorrichtung, vorgesehen sein, welche das Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls ist es denkbar, dass der Computer zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Der Computer kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie Bluetooth oder Nahfeldkommunikation (NFC) aufweisen. Ferner kann der Computer als ein oder mehrere Steuergeräte, d. h. auch als ein System aus Steuergeräten, ausgeführt sein. Der Computer kann bspw. auch in einer Cloud und/oder als ein Server vorgesehen sein, um über die Schnittstelle die Datenverarbeitung für eine lokale Anwendung zur Verfügung zu stellen. Auch ist es möglich, dass der Computer als ein mobiles Gerät, wie ein Smartphone, ausgeführt ist.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein.

Ebenfalls unter Schutz gestellt ist ferner eine adaptive Benutzeroberfläche für Textilmaschinen mit dynamischer Anpassung an Benutzerpräferenzen und -verhalten. Die adaptive Benutzeroberfläche kann dabei dazu ausgeführt sein, das erfindungsgemäße Verfahren auszuführen und/oder eine Benutzerschnittstelle entsprechend dem erfindungsgemäßen Verfahren bereitzustellen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung von Ausführungsvarianten der Erfindung,
- Fig. 2: eine schematische Darstellung einer Benutzerschnittstelle.

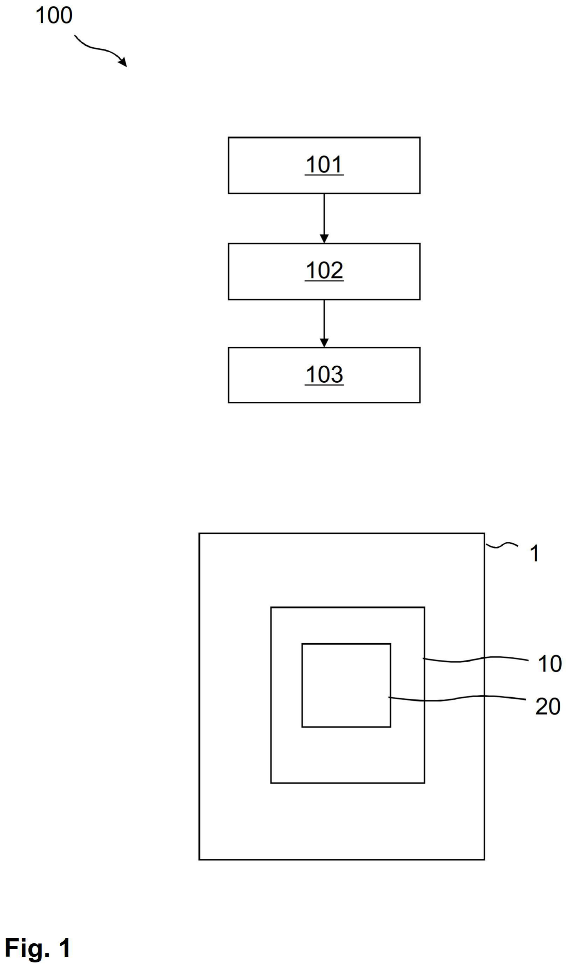

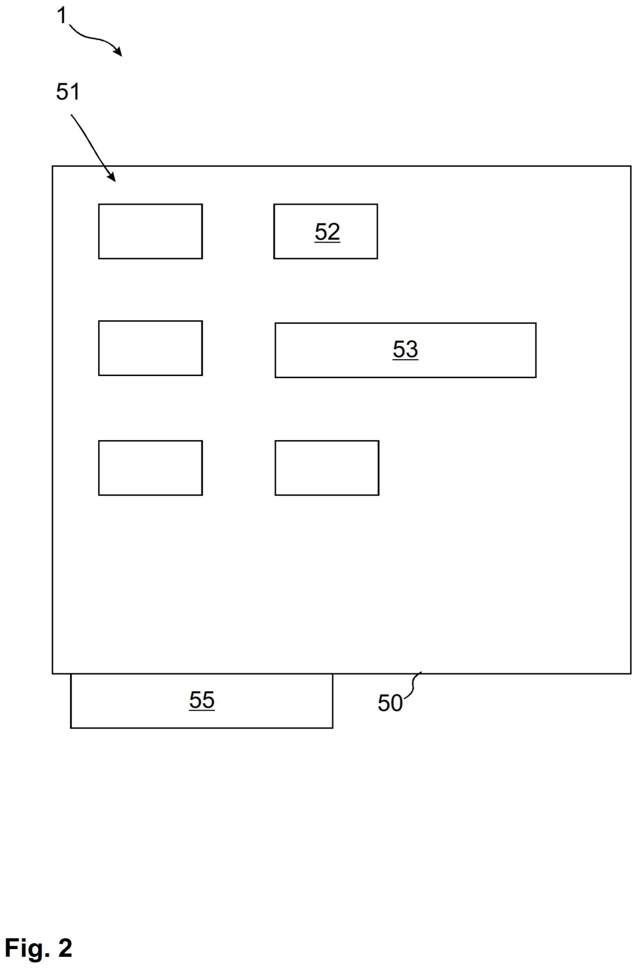

In Fig. 1 und 2 sind schematische Darstellungen gezeigt, um Ausführungsvarianten der Erfindung zu veranschaulichen.

Ausführungsbeispiele der Erfindung beziehen sich dabei auf Benutzerschnittstellen 50 für industrielle Textilmaschinen 1, insbesondere auf eine adaptive Benutzeroberfläche, die sich automatisch an die individuellen Bedürfnisse und Präferenzen der Benutzer anpasst, um die Bedienung zu optimieren und die Effizienz zu steigern.

Es ist möglich, dass das erfindungsgemäße Verfahren 100 bzw. System 1 Nutzungsprofile, vorzugsweise Benutzerprofile, basierend auf den Interaktionen und Präferenzen der Benutzer erstellt und aktualisiert und die Benutzerschnittstelle 50 dynamisch anpasst, um relevante Informationen und Steuerungsoptionen für den Betrieb und insbesondere die Bedienung der Textilmaschine 1 zu priorisieren. Hierzu werden vorzugsweise Technologien des maschinellen Lernens und der künstlichen Intelligenz verwendet.

Es kann möglich sein, dass zur Bereitstellung von Nutzungsprofilen und insbesondere Benutzerprofilen RFID-Tags oder biometrische Daten zur Identifikation der Benutzer eingesetzt werden. Auch ist es denkbar, dass zur Benutzeranmeldung eine Option zur Anmeldung über Benutzername und Passwort bereitgestellt wird.

Eine dynamische Anpassung der Benutzerschnittstelle 50 (englisch: User Interface oder kurz: UI) kann ggf. basierend auf Nutzungsprofile erfolgen. Darunter können Benutzerprofile verstanden werden, die Präferenzen, Nutzungsgewohnheiten wie häufig genutzte Funktionen und individuelle Leistungsindikatoren enthalten und/oder auf dieser Basis erstellt werden. Auch kann eine kontextbezogene Benutzerschnittstelle 50 vorgesehen sein. Dies ist bspw. eine Benutzeroberfläche, die sich an den aktuellen Kontext wie aktuelle Aufgaben oder Tageszeit anpasst.

Es ist außerdem möglich, dass adaptive Lernalgorithmen und/oder maschinelles Lernen eingesetzt werden, um die Benutzeroberfläche kontinuierlich zu optimieren. Künstliche Intelligenz (KI)-basierte Vorhersagemodelle können bspw. die nächsten Schritte des Benutzers antizipieren und relevante Ul-Elemente anbieten. Dies kann auch unter den Begriff "vorhersagende UI-Elemente" zusammengefasst werden. Ferner können interaktive und/oder intuitive UI-Elemente zum Einsatz kommen. Gesten- und/oder Sprachsteuerung und/oder interaktive Tutorials, die sich an den Kenntnisstand des Benutzers anpassen, sind hier als weitere Möglichkeiten zu nennen. Darüber hinaus ermöglichen Echtzeit-Feedback-Systeme ggf. eine kontinuierliche Verbesserung der UI durch Erfassung von Benutzerfeedback, bspw. durch den Einsatz eines Feedback-Loops.

Es ist weiter möglich, dass durch die Auswahl der zumindest einen geeigneten Anpassung wenigstens ein wahrscheinlichkeitsbasiertes Auswahlverfahren ausgeführt wird, welches eine Anwendung eines auf Maschinellen Lernen basierten Vorhersagemodells umfasst. Das Vorhersagemodell kann eine Eingabe auf Basis des zumindest einen Nutzungsprofils erhalten und eine Aktivität des Benutzers vorhersagen. Eine weitere Möglichkeit des wahrscheinlichkeitsbasierten Auswahlverfahrens ist eine Anwendung eines auf Maschinellen Lernen basierten Modells, welches eine Eingabe auf Basis des zumindest einen Nutzungsprofils erhält und dessen Ausgabe für die Definition der Anpassung verwendet wird.

Gemäß Ausführungsvarianten der Erfindung kann das Modell bzw. Vorhersagemodell auf einem tiefen neuronalen Netzwerk basieren, welches als rekurrentes neuronales Netzwerk mit Lang-Kurzzeit-Gedächtnis-Zellen implementiert ist. Diese Architektur eignet sich besonders zur Verarbeitung sequentieller Daten, da sie vergangene Zustände speichert und damit langfristige Abhängigkeiten erfassen kann.

Gemäß weiteren Ausführungsvarianten der Erfindung kann das neuronale Netzwerk eine Eingabeschicht zur Aufnahme der Eingabedaten umfassen, insbesondere bestehend aus normalisierten numerischen Werten. Mehrere LSTM-Schichten mit 128 bis 256 Neuronen pro Schicht können zeitabhängige Muster modellieren. Eine oder mehrere vollständig verbundene Schichten mit einer Dichte von 64 bis 128 Neuronen und einer ReLU-Aktivierungsfunktion können die Daten weiterverarbeiten. Die Softmax-Schicht in der Ausgabeschicht kann eine Wahrscheinlichkeitsverteilung für die vorhergesagten Benutzeraktivitäten ausgeben.

In weiteren Ausführungsformen kann vorgesehen sein, dass die Eingabedaten ein Nutzungsprofil eines Benutzers umfassen, das in einem Vektor mit mehreren Merkmalen codiert wird. Dazu können zeitliche Informationen wie Tageszeit, Wochentag und/oder Monat, aber auch weitere Kontextdaten wie Produktionsparameter der Textilmaschine 1 gehören. Weiterhin können Verhaltensdaten aus der Nutzung der Benutzerschnittstelle 50 analysiert werden, wobei Schnittstellenelemente 51, Steuerungselemente 52 und Eingabeelemente 53 erfasst werden. Zudem können weitere Systemstatus-Informationen berücksichtigt werden. Die Merkmale können vorverarbeitet, normalisiert und in fester Sequenzlänge segmentiert werden.

Gemäß weiteren Ausführungsvarianten kann das Modell als Ausgabe eine Vorhersage der nächstwahrscheinlichen Benutzeraktivität in Form einer Wahrscheinlichkeitsverteilung ausgeben. Beispiele für Vorhersageklassen können die Nutzung einer bestimmten Anwendung und/oder Funktion, der Wechsel des Gerätemodus, die Anpassung von Parametern und/oder die Interaktion mit bestimmten Inhalten über die Benutzerschnittstelle 50 sein.

In einer weiteren Ausführungsform kann das Training durch überwachtes Lernen erfolgen, wobei historische Nutzungsdaten aggregiert und vorverarbeitet werden. Die Trainingsstrategie kann die Cross-Entropy-Loss-Funktion zur Optimierung der Klassifikationsleistung, den Adam-Optimizer mit einer initialen Lernrate von 0,001 sowie eine Dropout-Rate von 20-30 % zur Vermeidung von Overfitting umfassen. Die Batch-Größe kann zwischen 32 und 128 Instanzen liegen und das Modell kann über 50 bis 100 Epochen trainiert werden, mit einer Stopp-Bedingung bei ausbleibender Verbesserung der Validierungsgenauigkeit.

Gemäß weiteren Ausführungsformen kann vorgesehen sein, dass die Trainingsdaten aus anonymisierten Nutzungsprofilen bestehen, die über einen definierten Zeitraum hinweg gesammelt wurden. Die Auswahl kann basierend auf einer gleichmäßigen Verteilung über verschiedene Benutzergruppen und einer repräsentativen Stichprobe für verschiedene Nutzungsarten erfolgen. Datensätze mit ausreichender Anzahl an Aktivitäten können bevorzugt genutzt werden, um ein robustes Modell zu gewährleisten.

Zur Evaluierung des trainierten Modells können verschiedene Metriken herangezogen werden. Dazu können die Klassifikationsgenauigkeit, Präzision, Recall und F1-Score sowie die Analyse einer Konfusionsmatrix gehören.

Nach einer erfolgreichen Trainings- und Evaluierungsphase kann das Modell in eine produktive Umgebung integriert werden. Ein Computerprogramm 20 kann das Modell mit Hilfe eines Model-Serving-Frameworks wie TensorFlow Serving oder ONNX Runtime implementieren. Während der Laufzeit kann das Modell kontinuierlich Eingaben verarbeiten und periodisch auf Basis neuer Nutzungsdaten aktualisiert werden.

Es ist möglich, dass zur Personalisierung der Benutzeroberfläche zunächst Daten über Interaktionen und Präferenzen gesammelt werden und dann ggf. ein Nutzungsprofil, vorzugsweise Benutzerprofil, erstellt und kontinuierlich aktualisiert wird. Die Benutzerschnittstelle 50 und vorzugsweise -oberfläche passt sich vorzugsweise dynamisch an, basierend auf dem Nutzungsprofil und dem Kontext, indem relevante Informationen hervorgehoben werden. Benutzer können bspw. Feedback geben, das in Echtzeit verarbeitet wird, um die Oberfläche zu verbessern.

Ein beispielhafter konkreter Ablauf kann wie folgt vorgesehen sein:
1. Beim ersten Einsatz registriert der Benutzer sich über RFID, biometrische Daten oder manuelle Anmeldung. Ein Nutzungsprofil wird erstellt.
2. Während der Benutzung sammelt das System Daten über Interaktionen und Präferenzen, aktualisiert kontinuierlich das Nutzungsprofil und lernt die individuellen Vorlieben des Benutzers.
3. Basierend auf dem Nutzungsprofil und dem aktuellen Kontext wird die Benutzeroberfläche dynamisch angepasst, um relevante Informationen und Steuerungen hervorzuheben.
4. Benutzer können jederzeit Feedback geben, welches in Echtzeit verarbeitet wird, um die Benutzeroberfläche weiter zu verbessern.

Mögliche Vorteile der Erfindung sind eine erhöhte Effizienz, verbesserte Benutzerfreundlichkeit, kontinuierliche Optimierung und Flexibilität und Anpassbarkeit. So kann eine personalisierte Benutzeroberfläche, die sich an die Bedürfnisse des Benutzers anpasst, die Bedienung erleichtern, die Effizienz erhöhen und Fehler reduzieren. Durch den optionalen Einsatz von KI und maschinellem Lernen kann sich ferner die Benutzeroberfläche ständig an die Benutzergewohnheiten anpassen und somit immer benutzerfreundlicher werden. Modulare UI-Komponenten und Drag-and-Drop-Personalisierung ermöglichen ferner eine hohe Flexibilität und Anpassbarkeit für verschiedene Benutzer.

Fig. 1 veranschaulicht gemäß Ausführungsbeispielen der Erfindung ein Verfahren 100, mit dem die grundsätzliche Funktion zur Anpassung einer Benutzerschnittstelle 50 für eine Textilmaschine 1 dynamisch ermöglicht wird. Dies kann insbesondere zur Überwachung und/oder Steuerung eines Betriebs der Textilmaschine 1 auf Basis von Benutzereingaben über die Benutzerschnittstelle 50 dienen.

Gemäß einem ersten Verfahrensschritt 101 erfolgt eine Bereitstellung zumindest eines Nutzungsprofils für zumindest einen Benutzer der Textilmaschine 1.

Gemäß einem zweiten Verfahrensschritt 102 wird eine Anpassungsspezifikation für die Benutzerschnittstelle 50 auf Basis des bereitgestellten zumindest einen Nutzungsprofils generiert, um darüber zumindest eine Anpassung der Benutzerschnittstelle 50 an den Benutzer zu spezifizieren.

Gemäß einem dritten Verfahrensschritt 103 erfolgt eine Bereitstellung der generierten Anpassungsspezifikation.

Dabei kann die Anpassungsspezifikation automatisiert anhand des bereitgestellten zumindest einen Nutzungsprofils generiert werden, wobei hierzu automatisiert zumindest eine individuelle Anforderung des Benutzers ermittelt und die zumindest eine Anpassung der Benutzerschnittstelle 50 als zumindest eine dafür geeignete Anpassung der Benutzerschnittstelle 50 ausgewählt wird.

Die zumindest eine individuelle Anforderung des Benutzers (Benutzeranforderung) kann bspw. dadurch automatisiert ermittelt werden, dass zumindest eine historische Benutzeraktivität, vorzugsweise Benutzereingaben, die bevorzugt über die Benutzerschnittstelle 50 stattgefunden haben, und/oder eine Benutzerinformation, vorzugsweise umfassend eine Tätigkeitbeschreibung und/oder Persönlichkeitseigenschaften und/oder eine Erfahrungsspezifikation und/oder einen Kenntnisstand des Benutzers, ausgewertet wird.

Weiter ist es denkbar, dass die zumindest eine dafür geeignete Anpassung dadurch automatisiert ausgewählt wird, dass ein regelbasiertes und/oder wahrscheinlichkeitsbasiertes Auswahlverfahren durchgeführt wird, bei welchem aus mehreren Anpassungsoptionen eine ausgewählt wird, die die höchste Eignung für die Benutzeranforderung aufweist, vorzugsweise hinsichtlich einer Anordnung und/oder Visualisierungsparametern von Schnittstellenelementen 51 der Benutzerschnittstelle 50 und/oder einer Auswahl von Parametern der Textilmaschine 1, die über die Benutzerschnittstelle 50 einstellbar sind und den Betrieb der Textilmaschine 1 beeinflussen, und/oder eines Detailgrads und/oder eines Assistenzniveaus für diese Einstellungen (vgl. Fig. 2). Bspw. können je nach Benutzerpräferenz Elemente der Benutzerschnittstelle 50 in einer Größe dargestellt werden, die das Ablesen für den Benutzer erleichtert. Außerdem kann der Detailgrad der Einstellbarkeit der Textilmaschine 1 ggf. an einen Erfahrungs- oder Kenntnisstand des Benutzers angepasst werden.

Gemäß Fig. 2 kann die Benutzerschnittstelle 50 eine graphische Benutzeroberfläche mit mehreren Schnittstellenelementen 51 umfassen, wobei eine Auswahl und/oder Anordnung und/oder Beschriftung und/oder Funktion und/oder Darstellung und/oder Größe der Schnittstellenelemente 51 in Abhängigkeit von der Anpassungsspezifikation variiert wird.

Ferner kann auf Basis einer Benutzerinteraktion mit der angepassten Benutzerschnittstelle 50 eine Steuerung des Betriebs der Textilmaschine 1 durchgeführt werden, wobei in Abhängigkeit von der zumindest einen ausgewählten und/oder durchgeführten geeigneten Anpassung zumindest ein Steuerungsparameter der Steuerung automatisch angepasst wird, und/oder ein Steuerungselement 52 der Benutzerschnittstelle 50 angeordnet wird, und/oder ein Steuerungselement 52 der Benutzerschnittstelle 50 ein- oder ausgeblendet wird, und/oder wenigstens ein Eingabeelement 53 der Benutzerschnittstelle 50 ausgefüllt wird, vorzugsweise mit einem empfohlenen Wert vorausgefüllt wird, und/oder wenigstens ein Steuerungsparameter für den Benutzer vorgeschlagen wird, und/oder wenigstens eine über die Benutzerschnittstelle 50 angezeigte Information hervorgehoben oder ergänzt wird.

Fig. 1 zeigt ferner ein System 1, vorzugsweise in der Form einer Textilmaschine 1, gemäß Ausführungsvarianten der Erfindung. Diese kann eine Vorrichtung 10 zur dynamischen Anpassung einer Benutzerschnittstelle 50 für die Textilmaschine 1 umfassen. Ferner kann eine in Fig. 2 gezeigte Schnittstellenvorrichtung 55 vorgesehen sein, welche die Benutzerschnittstelle 50 für den Benutzer bereitstellt, wobei die Schnittstellenvorrichtung 55 die Vorrichtung 10 aufweist und/oder mit der Textilmaschine 1 fest verbunden sein kann. Darüber hinaus können Ausführungsvarianten der Erfindung ein in Fig. 1 dargestelltes Computerprogramm 20 umfassen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: System, Textilmaschine

- 10: Vorrichtung, Computer

- 20: Computerprogramm

- 50: Benutzerschnittstelle
- 51: Schnittstellenelement
- 52: Steuerungselement
- 53: Eingabeelement
- 55: Schnittstellenvorrichtung

- 100: Verfahren
- 101: erster Verfahrensschritt
- 102: zweiter Verfahrensschritt
- 103: dritter Verfahrensschritt

## Patentansprüche

1. Verfahren (100) zur dynamischen Anpassung einer Benutzerschnittstelle (50) für eine Textilmaschine (1), insbesondere zur Überwachung und/oder Steuerung eines Betriebs der Textilmaschine (1) auf Basis von Benutzereingaben über die Benutzerschnittstelle (50), umfassend:
- Bereitstellen (101) zumindest eines Nutzungsprofils für zumindest einen Benutzer der Textilmaschine (1),
- Generieren (102) einer Anpassungsspezifikation für die Benutzerschnittstelle (50) auf Basis des bereitgestellten zumindest einen Nutzungsprofils, um darüber zumindest eine Anpassung der Benutzerschnittstelle (50) an den Benutzer zu spezifizieren,
- Bereitstellen (103) der generierten Anpassungsspezifikation,
**dadurch gekennzeichnet,**
**dass** die Anpassungsspezifikation automatisiert anhand des bereitgestellten zumindest einen Nutzungsprofils generiert wird, wobei hierzu automatisiert zumindest eine individuelle Anforderung des Benutzers ermittelt und die zumindest eine Anpassung der Benutzerschnittstelle (50) als zumindest eine dafür geeignete Anpassung der Benutzerschnittstelle (50) ausgewählt wird.

2. Verfahren (100) nach Anspruch 1, **dadurch gekennzeichnet, dass** die zumindest eine individuelle Anforderung des Benutzers (Benutzeranforderung) dadurch automatisiert ermittelt wird, dass zumindest eine historische Benutzeraktivität, vorzugsweise Benutzereingaben, die bevorzugt über die Benutzerschnittstelle (50) stattgefunden haben, und/oder eine Benutzerinformation, vorzugsweise umfassend eine Tätigkeitbeschreibung und/oder Persönlichkeitseigenschaften und/oder eine Erfahrungsspezifikation und/oder einen Kenntnisstand des Benutzers, ausgewertet wird, und
dass die zumindest eine dafür geeignete Anpassung dadurch automatisiert ausgewählt wird, dass ein regelbasiertes und/oder wahrscheinlichkeitsbasiertes Auswahlverfahren durchgeführt wird, bei welchem aus mehreren Anpassungsoptionen eine ausgewählt wird, die die höchste Eignung für die Benutzeranforderung aufweist, vorzugsweise hinsichtlich einer Anordnung und/oder Visualisierungsparametern von Schnittstellenelementen (51) der Benutzerschnittstelle (50) und/oder einer Auswahl von Parametern der Textilmaschine (1), die über die Benutzerschnittstelle (50) einstellbar sind und den Betrieb der Textilmaschine (1) beeinflussen, und/oder eines Detailgrads und/oder eines Assistenzniveaus für diese Einstellungen.

3. Verfahren (100) nach einem der vorhergehenden Ansprüche, **dadurch gekennzeichnet, dass** für die Auswahl der zumindest einen geeigneten Anpassung wenigstens ein wahrscheinlichkeitsbasiertes Auswahlverfahren ausgeführt wird, welches zumindest eines der folgenden Auswahlmethoden umfasst:
- eine schrittweise Annäherung an die geeignete Anpassung, vorzugsweise gemäß einem vordefinierten Optimierungskriterium für die Eignung,
- eine Anwendung eines auf Maschinellen Lernen basierten Modells, welches eine Eingabe auf Basis des zumindest einen Nutzungsprofils erhält und dessen Ausgabe für die Definition der Anpassung verwendet wird,
- eine Anwendung eines auf Maschinellen Lernen basierten Vorhersagemodells, welches eine Eingabe auf Basis des zumindest einen Nutzungsprofils erhält und welches eine Aktivität des Benutzers vorhersagt, wobei auf der Basis einer Ausgabe des Vorhersagemodells für die vorhergesagte Aktivität relevante Anpassungen ausgewählt werden, um die zumindest eine geeignete Anpassung zu erhalten.

4. Verfahren (100) nach einem der vorhergehenden Ansprüche, **dadurch gekennzeichnet, dass** die Generierung der Anpassungsspezifikation die folgenden Schritte umfasst, welche während der Benutzung der Textilmaschine (1) und/oder während der Interaktion mit der Benutzerschnittstelle (50) durch den Benutzer wiederholt durchgeführt werden:
- Ermitteln eines aktuellen Kontextes der Benutzung der Benutzerschnittstelle (50) und/oder der Textilmaschine (1),
- Priorisieren von relevanten Informationen und/oder Steuerungsoptionen, welche durch die Benutzerschnittstelle (50) bereitgestellt werden, in Abhängigkeit von dem ermittelten Kontext.

5. Verfahren (100) nach einem der vorhergehenden Ansprüche, **dadurch gekennzeichnet, dass** die Bereitstellung der Anpassungsspezifikation eine automatisierte Anpassung der Benutzerschnittstelle (50) entsprechend der Anpassungsspezifikation umfasst, und/oder dass die Bereitstellung der Anpassungsspezifikation umfasst:
- Initiieren einer Ausgabe eines Vorschlags für die Anpassung der Benutzerschnittstelle (50) entsprechend der Anpassungsspezifikation,
- Erfassen einer Bestätigungseingabe des Benutzers mit einer Bestätigung des Vorschlags für die Anpassung,
- Durchführen der Anpassung der Benutzerschnittstelle (50) entsprechend der Anpassungsspezifikation, ausgelöst durch die erfasste Bestätigungseingabe.

6. Verfahren (100) nach einem der vorhergehenden Ansprüche, **dadurch gekennzeichnet, dass** die Bereitstellung des zumindest einen Nutzungsprofils zumindest eine der folgenden Schritte umfasst:
- Identifizieren der individuellen Benutzeranforderungen, insbesondere umfassend Bedürfnissen und/oder Präferenzen des Benutzers,
- Erfassung und Auswerten von Interaktionen des Benutzers.

7. Verfahren (100) nach einem der vorhergehenden Ansprüche, **dadurch gekennzeichnet, dass** das Nutzerprofil regelmäßig und automatisch auf Basis einer Auswertung der Benutzung der Benutzerschnittstelle (50) aktualisiert wird, so dass die Anpassung nicht nur automatisiert, sondern auch lernfähig durchgeführt wird.

8. Verfahren (100) nach einem der vorhergehenden Ansprüche, **dadurch gekennzeichnet, dass** die automatisierte Generierung der Anpassungsspezifikation wiederholt und/oder regelmäßig und/oder kontinuierlich während der Benutzung der Benutzerschnittstelle (50) durch den Benutzer stattfindet, vorzugsweise zeitgesteuert als Hintergrundprozess.

9. Verfahren (100) nach einem der vorhergehenden Ansprüche, **dadurch gekennzeichnet, dass** die folgenden Schritte vorgesehen sind:
- Initiieren einer Authentifizierung des Benutzers, vorzugsweise mittels RFID und/oder biometrischen Daten und/oder einer passwortbasierten Anmeldung,
- Bestimmen einer ersten Angabe zum Nutzungsprofil auf Basis der Authentifizierung,
- Erfassen von Nutzungsdaten während der Benutzung der Benutzerschnittstelle (50), welche eine Interaktion des Benutzers mit der Benutzerschnittstelle (50) und/oder Benutzerpräferenzen spezifizieren,
- Bestimmen einer zweiten Angabe zum Nutzungsprofil auf Basis der erfassten Nutzungsdaten,
- Erfassen eines Kontextes, in welchem die Benutzung an der Textilmaschine (1) stattfindet, vorzugsweise in Abhängigkeit von zumindest einem Betriebsparameter der Textilmaschine (1) wie einer Produktionseinstellung und/oder Geräteeinstellung und/oder Materialeinstellung bei der Textilmaschine (1),
- Durchführen der automatisierten Generierung der Anpassungsspezifikation anhand der Angaben zum Nutzungsprofil und des Kontextes, um die Benutzerschnittstelle (50) dynamisch während der Benutzung anzupassen, wobei vorzugsweise für den Kontext relevante Informationen und/oder Steuerungsmöglichkeiten für die Textilmaschine (1) bei der Benutzerschnittstelle (50) hervorgehoben werden,
wobei vorzugsweise eine Feedbackeingabe des Benutzers erfasst wird, um - vorzugsweise in Echtzeit - die Generierung der Anpassungsspezifikation zu beeinflussen.

10. Verfahren (100) nach einem der vorhergehenden Ansprüche, **dadurch gekennzeichnet, dass** die Benutzerschnittstelle (50) eine graphische Benutzeroberfläche mit mehreren Schnittstellenelementen (51) umfasst, wobei eine Auswahl und/oder Anordnung und/oder Beschriftung und/oder Funktion und/oder Darstellung und/oder Größe der Schnittstellenelemente (51) in Abhängigkeit von der Anpassungsspezifikation variiert wird.

11. Verfahren (100) nach einem der vorhergehenden Ansprüche, **dadurch gekennzeichnet, dass** auf Basis einer Benutzerinteraktion mit der angepassten Benutzerschnittstelle (50) eine Steuerung des Betriebs der Textilmaschine (1) durchgeführt wird, wobei in Abhängigkeit von der zumindest einen ausgewählten und/oder durchgeführten geeigneten Anpassung
- zumindest ein Steuerungsparameter der Steuerung automatisch angepasst wird, und/oder
- ein Steuerungselement (52) der Benutzerschnittstelle (50) angeordnet wird, und/oder
- ein Steuerungselement (52) der Benutzerschnittstelle (50) ein- oder ausgeblendet wird, und/oder
- wenigstens ein Eingabeelement (53) der Benutzerschnittstelle (50) ausgefüllt wird, und/oder
- wenigstens ein Steuerungsparameter für den Benutzer vorgeschlagen wird, und/oder
- wenigstens eine über die Benutzerschnittstelle (50) angezeigte Information hervorgehoben oder ergänzt wird.

12. System (1), vorzugsweise Textilmaschine (1), aufweisend:
eine Vorrichtung (10) zur dynamischen Anpassung einer Benutzerschnittstelle (50) für die Textilmaschine (1), insbesondere zur Überwachung und/oder Steuerung eines Betriebs der Textilmaschine (1) auf Basis von Benutzereingaben über die Benutzerschnittstelle (50), wobei die Vorrichtung (10) umfasst:
- Mittel zur Bereitstellung zumindest eines Nutzungsprofils für zumindest einen Benutzer der Textilmaschine (1),
- Mittel zur Generierung einer Anpassungsspezifikation für die Benutzerschnittstelle (50) auf Basis des bereitgestellten zumindest einen Nutzungsprofils, um darüber zumindest eine Anpassung der Benutzerschnittstelle (50) an den Benutzer zu spezifizieren,
- Mittel zur Bereitstellung der generierten Anpassungsspezifikation,
**dadurch gekennzeichnet,**
**dass** die Vorrichtung (10) dazu ausgeführt ist, die Anpassungsspezifikation automatisiert anhand des bereitgestellten zumindest einen Nutzungsprofils zu generieren und hierzu automatisiert zumindest eine individuelle Anforderung des Benutzers zu ermitteln und die zumindest eine Anpassung der Benutzerschnittstelle (50) als zumindest eine dafür geeignete Anpassung der Benutzerschnittstelle (50) auszuwählen.

13. System (1) nach Anspruch 12, **dadurch gekennzeichnet, dass** eine Schnittstellenvorrichtung (55) vorgesehen ist, welche die Benutzerschnittstelle (50) für den Benutzer bereitstellt, wobei die Schnittstellenvorrichtung (55) die Vorrichtung (10) aufweist und/oder mit der Textilmaschine (1) fest verbunden ist.

14. Computerprogramm (20), umfassend Befehle, die bei der Ausführung des Computerprogramms (20) durch mindestens einen Computer (10) diesen veranlassen, das Verfahren (100) nach einem der Ansprüche 1 bis 11 auszuführen.

15. Vorrichtung (10) zur Datenverarbeitung, umfassend Mittel zur Ausführung des Verfahrens (100) nach einem der Ansprüche 1 bis 11.
